# EUROPÄISCHE PATENTSCHRIFT

(11) **EP 0 363 596 B1**
(45) Veröffentlichungstag und Bekanntmachung des Hinweises auf die Patenterteilung: **06.04.1994**
(21) Anmeldenummer: 89114550.0
(22) Anmeldetag: 07.08.1989
(51) Int. Cl.: B29C 51/36, B29C 51/42, B29C 51/16

(54) **Verfahren zur Herstellung von Formteilen oder Gegenständen für Kraftfahrzeuge oder Kraftfahrzeuginnenverkleidungen**
Method for the manufacture of shaped parts or objects for motor vehicles or motor vehicle upholstery
Procédé de fabrication de pièces ou objets moulés pour véhicules ou pour la garniture intérieure de véhicules

(30) Priorität: 11.10.1988 DE 3834608
(43) Veröffentlichungstag der Anmeldung: 18.04.1990
(73) Patentinhaber: ALKOR GMBH KUNSTSTOFFE, D-81451 München (DE)
(72) Erfinder: Tesche, Bernd, Dr., D-5650 Solingen 1 (DE); Landler, Josef, Chem.-Ing., D-8190 Wolfratshausen (DE)

(56) Entgegenhaltungen:
- EP-A- 0 288 728
- EP-A- 0 288 733
- DE-A- 3 612 898
- DE-C- 3 506 232
- DE-U- 8 706 204
- GB-A- 2 091 627
- US-A- 4 474 725
- PATENT ABSTRACTS OF JAPAN, Band 12, Nr. 272 (M-724)[3119], 28. Juli 1988;& JP-A-63 54 231 (KASAI KOGYO CO., LTD) 08-03-1988
- PATENT ABSTRACTS OF JAPAN, Band 10, Nr. 357 (M-540)[2414], 2. Dezember 1986;& JP-A-61 154 921 (TAKASHIMAYA NITSUPATSU KOGYO K.K.) 14-07-1986

## Beschreibung

Die vorliegende Erfindung betrifft ein Verfahren zur Herstellung von Formteilen oder Gegenständen für Kraftfahrzeuge oder Kraftfahrzeuginnenverkleidungen aus thermoverformbaren Kunststoffolien, -platten oder -bahnen, die vor der Einbringung in die Negativtiefziehform auf eine Temperatur in der Nähe oder oberhalb des Schmelzbereiches, Schmelzpunktes oder auf eine Temperatur innerhalb des thermoplastischen Bereiches bis 260 °C oder darüber aufgeheizt werden und unter Mitverwendung eines Druckunterschiedes und unter Erwärmung in die Negativtiefziehform eingebracht und in der Negativtiefziehform unter Narbgebung und/oder Oberflächendekoration verformt werden und die Narbgebung und/oder Oberflächendekoration der Kunststoffolie, -platte oder -bahn durch eine poröse, luftdurchlässige, vorzugsweise mikroporöse luftdurchlässige Formoberfläche aufweisende Negativtiefziehform erfolgt, die eine metall-, metallegierung-, mikrometallpartikelhaltige keramikmetall- und/oder keramikmikrometallpartikelhaltige Schicht oder Oberfläche mit einer durchschnittlichen Metallschichtdicke, Metallpartikeldicke oder Partikeldicke unter 80 µm aufweist, wobei zwischen der kälteren Werkzeugtemperatur und der Kunststoffolie, -platte oder -bahn, ein Temperaturunterschied von mehr als 30 °C eingehalten wird. Innerhalb dieses Verfahrens erfolgt eine Einbringung von Formkörpern, Gegenständen oder Folienbahnzuschnitten unter Einhaltung bestimmter Verfahrensbedingungen.

Aus der DE-OS 26 06 325 ist bereits ein Verfahren zum bleibenden Verformen von Schalldämmplatten, vorzugsweise für den Automobilbau bekannt, wobei das Verformen durch ein an sich bekanntes Tiefziehen mit Vakuum oder Druckluft erfolgt und eine oberhalb der bleibenden zu verformenden Platten angeordnete plastische verformbare, vorzugsweise aus Gummi bestehende Platte bei jedem Tiefziehgang mitverformt wird.

Nach diesem Verfahren können somit Platten oder andere Gegenstände im Negativtiefziehverfahren eingebracht werden, sofern sie innerhalb des Tiefziehvorganges mitverformt werden können.

Die JP-A-61154921 betrifft ein Verfahren zur Herstellung von Formteilen für Automobile aus Kunststoffolie. Dabei wird das nichtperforierte Basismaterial aus Kunstharz oder Metall, das im Spritzgußverfahren, Preßverfahren hergestellt wurde, auf die Oberfläche der Form aufgebracht, mit einem Bindemittel darauf befestigt. Das luftundurchlässige Material, an dem ein Polstermaterial in Form eines Polyurethanschaumes, an dem Vinylchloridpolymerisat laminiert ist, wird an dem Rahmen angeordnet und unter Ansaugen erhitzt, erweicht, so daß das Basismaterial die Bindemittelschicht oder Klebstoffschicht bedeckt.

Gemäß JP-A-6115 4921 werden Tiefziehformen mit Saugkanälen verwendet, die eine Narbgebung der Kunststoffbahnoberfläche oder Kunststoffbahnoberflächenschicht nicht oder nur unter erheblichen Mängel bewirken können.

Die DE-U-8706 204 betrifft ein Negativtiefziehverfahren, bei dem der Negativtiefziehform eine Auffangwanne sowie Düsen, Spritzen und dergleichen zugeordnet sind, deren Öffnungen und/oder Düsenwinkel auf die Negativtiefziehform zugerichtet sind. Die Negativtiefziehform gemäß DE-U-8706 204 ist ebenfalls eine poröse, vorzugsweise mikroporöse luftdurchlässige Negativtiefziehform und es wird ebenfalls ein Temperaturunterschied von mehr als 30 °C eingehalten.

Ziel und Aufgabe der vorliegenden Erfindung war es, innerhalb des Negativtiefziehverfahrens eine Verfahrensverbesserung bei der Einbringung von Gegenständen, Formteilen und dgl. zu erzielen.

Erfindungsgemäß wurde festgestellt, daß das Verfahren zur Herstellung von Formteilen oder Gegenständen für Kraftfahrzeuge oder Kraftfahrzeuginnenverkleidungen der eingangs genannten Art verbessert werden kann und diesen Aufgaben gerecht wird.

Gemäß der vorliegenden Erfindung wird in die Negativtiefziehform ein Formkörper, ein Gegenstand oder ein Folienbahnzuschnitt aus dem gleichen oder einem anderen Material mit seiner Sicht- oder Dekorseite auf einen vorbestimmten Bereich der Formoberfläche oder Negativtiefziehform eingelegt, eingebracht und/oder dieser so befestigt oder angeordnet, daß der Formkörper, Gegenstand oder der Folienbahnzuschnitt an der inneren Formfläche oder in einer Vertiefung oder Erhebung der Negativtiefziehform unmittelbar anliegt, die äußeren aufliegenden Seitenkanten des Gegenstandes von der Negativtiefziehform keinen oder einen durchschnittlichen Abstand von weniger als 500 µm, vorzugsweise weniger als 200 µm, aufweisen und nachfolgend auf seiner Rückseite unter Freilassung der gewünschten Sichtfläche (unter einwandfreiem Konturenverlauf) die erhitzte Kunststoffolie, -platte oder -bahn oder aus einem Breitschlitzextruder austretenden Kunststoffbahn unter Ausnutzung der Wärmekapazität derselben, die einen Gesamtgehalt der bei der Verformungstemperatur und Verformungszeit flüchtigen Bestandteile kleiner als 3 Gew.-% aufweisen, den Formkörper, Gegenstand oder der Folienbahnzuschnitt auf seiner nicht auf der Negativtiefziehform aufliegenden Fläche umschließt oder teilweise bedeckt. Nachfolgend wird der Tiefziehling um mehr als 50 °C gekühlt oder schockgekühlt, hinterschäumt und mit einem Träger hinterlegt, wobei auch der eingebrachte Formkörper, Gegenstand oder Folienbahnzuschnitt an seinen beschichteten Flächen hinterschäumt und mit einem Träger hinterlegt wird.

Nach einer Ausführungsform ist die Länge des einzuschließenden oder teilweise zu beschichtenden Formkörpers oder Gegenstandes kleiner als die beschichtete Hälfte, vorzugsweise kleiner als ein Drittel des Tiefziehlings oder des nach dem Negativtiefziehverfahren hergestellten Kunststofformteiles oder Gegenstandes.

Nach einer bevorzugten Ausführungsform wird die Kunststoffolie, kunststoffhaltige Bahn oder Kunststoffplatte vor der Einbringung in die Negativtiefziehform auf eine Temperatur in der Nähe oder oberhalb des Schmelzbereiches, Schmelzpunktes oder auf eine Temperatur innerhalb des thermoplastischen Bereiches bis 260 °C oder darüber aufgeheizt und die Werkzeugtemperatur (die Temperatur der Negativtiefziehform) wird um mehr als 30 °C, vorzugsweise um mehr 80 °C unter dem Schmelzpunkt, dem Schmelzpunktbereich oder der Schmelztemperatur oder Erweichungstemperatur der Kunststoffolie, kunststoffhaltigen Bahn oder Kunststoffplatte eingestellt. Danach wird die auf die Verformungstemperatur erhitzte Kunststoffolie, kunststoffhaltige Bahn oder Kunststoffplatte oder aus einem Breitschlitzextruder austretende Kunststoffbahn in der Negativtiefziehform eingespannt und gehalten und in der Negativtiefziehform verformt, wobei unter Ausnutzung der Wärmekapazität der Kunststoffolie, kunststoffhaltigen Bahn oder Kunststoffplatte oder der extrudierten Bahn der Formkörper, Gegenstand oder der Folienbahnzuschnitt auf seiner nicht auf der Negativtiefziehform aufliegenden Fläche von der tiefgezogenen Kunststoffolie, Kunststoffbahn oder -platte umschlossen oder teilweise überschichtet oder bedeckt und nachfolgend der Tiefziehling um mehr als 50 °C, vorzugsweise mehr als 100 °C, gekühlt oder schockgekühlt, hinterschäumt und mit einem Träger hinterlegt wird, wobei vorzugsweise auch der eingebrachte Formkörper, Gegenstand oder Folienbahnzuschnitt an seinen beschichteten Flächen hinterschäumt und mit einem Träger hinterlegt wird.

Nach einer bevorzugten Ausführungsform ist der zu beschichtende oder einzubettende Formkörper, Gegenstand oder der Folienbahnzuschnitt auf den zu beschichtenden Flächen mit einer Klebeschicht, vorzugsweise hitzeaktivierbaren Klebeschicht, oder einem Haftvermittler versehen.

Nach einer weiteren bevorzugten Ausführungsform werden die zu beschichtenden oder einzubettenden Formkörper, Gegenstände oder die Folienbahnzuschnitte durch eine Übergabevorrichtung auf ein vorbestimmtes Flächenteil der Negativtiefziehform aufgebracht, dort befestigt und von der nachträglich eingebrachten sowie dort verformten Kunststoffolie, kunststoffhaltigen Bahn oder der extrudierten Bahn umschlossen oder teilweise beschichtet.

Gemäß der Erfindung wird die Kunststoffolie, kunststoffhaltige Bahn oder Kunststoffplatte unter Narbgebung und/oder Oberflächendekoration in der Negativtiefziehform verformt. Die Narbgebung und/oder Oberflächendekoration der Kunststoffolie, kunststoffhaltigen Bahn oder Kunststoffplatte erfolgt durch eine poröse, luftdurchlässige, vorzugsweise mikroporöse luftdurchlässige Formoberfläche aufweisende Negativtiefziehform, die eine metall-, metallegierung-, mikrometallpartikelhaltige, keramikmetall- und/oder keramikmetallmikropartikelhaltige Schicht oder Oberfläche mit einer durchschnittlichen Metallschichtdicke oder Metallpartikeldicke unter 80 µm, vorzugsweise unter 60 µm, aufweist, wobei zwischen der Werkzeugtemperatur und der Kunststoffolie, kunststoffhaltigen Bahn oder Kunststoffplatte, ein Temperaturunterschied von mehr als 30 °C, vorzugsweise mehr als 80 °C, eingehalten wird.

Die Kunststoffolie, kunststoffhaltige Bahn oder Kunststoffplatte wird vor der Einbringung in die Negativtiefziehform nach einer bevorzugten Ausführungsform auf eine Temperatur in der Nähe oder oberhalb des Schmelzbereiches, Schmelzpunktes oder auf eine Temperatur innerhalb des thermoplastischen Bereiches bis 260 °C aufgeheizt, während die Werkzeugtemperatur um mehr als 30 °C, vorzugsweise um mehr als 80 °C, unter dem Schmelzpunkt, dem Schmelzbereich oder der Schmelztemperatur oder Erweichungstemperatur der Kunststoffolie, kunststoffhaltigen Bahn oder Kunststoffplatte eingestellt wird.

Nach einer bevorzugten Ausführungsform des erfindungsgemäßen Verfahrens werden Folien mit einer Shore-D-Härte von 20 bis 60, vorzugsweise 25 bis 40, unter Narb- und/oder Dekorgebung im Negativtiefziehverfahren verformt.

Nach einer weiteren bevorzugten Ausführungsform des erfindungsgemäßen Verfahrens werden die Kunststoffolien mit einem wärmestabilen Polyolefin-, vorzugsweise Polypropylenschaum, mit einer Schaumdicke von 0,5 bis 10 mm, vorzugsweise 1,5 bis 5 mm, laminiert oder versehen, bevor sie in der Negativtiefziehform dreidimensional verformt und die Folienoberfläche genarbt und/oder oberflächenstrukturiert werden, wobei gegebenenfalls die Schaumschicht mit einem Träger oder einer Trägerschicht hinterlegt wird.

Die Kunststoffolie wird nach einer Ausführungsform nach der dreidimensionalen Verformung, Narbung und/oder Oberflächenstrukturierung in dem Werkzeug nach oder während der Abkühlung entweder in der Form selbst oder in einem getrennten Arbeitsgang und/oder in einer anderen Form mit einem weichen bis mittelharten Schaum, vorzugsweise Polyurethanschaum, hinterschäumt, wobei gegebenenfalls bei der Hinterschäumung zusätzlich ein Träger oder eine Trägerschicht eingelegt wird.

Im Unterschied zu dem Positivtiefziehverfahren kann das erfindungsgemäße Verfahren verschiedene Muster des Urmodels widergeben, so z.B. zwei oder mehrere Arten von Narben, Ziernähten, Buchstaben, Designs, Knöpfe und/oder Holznarben oder andere Strukturierungen.

Die verwendbaren Kunststoffbänder, -folien oder -platten bestehen aus an sich bekannten Kunststoffen, vorzugsweise aus geschäumten Kunstleder, PVC-Schaum oder Polyolefin-Schaumlaminaten oder sind nicht geschäumte Folien, Bänder oder Platten.

Sie werden direkt oder in einem weiteren Arbeitsgang mit einem steifen Träger hinterlegt, wodurch Produkte mit weichem Griff und genaue Widergaben von Oberflächenstrukturen erreicht werden.

Mit Hilfe des erfindungsgemäßen Verfahrens gelingt es, verschiedenfarbige Materialien zu verformen, z.B. Folien mit Wolkendruck, Design und dgl.

Der Zeitaufwand für die Formherstellung ist kürzer gegenüber dem Verfahren "Slush-Moulding".

Im Rahmen des erfindungsgemäßen Verfahrens werden im Negativtiefziehverfahren Kunststoffolien, kunststoffhaltige Bahnen oder Kunststoffplatten verformt, die aus Kunststoff, einer Kunststoffmischung oder Kunststofflegierung und bezogen auf 100 Gew.-Teile Kunststoff, Kunststoffmischung oder Kunststofflegierung 0,01 bis 15 Gew.-Teile, vorzugsweise 0,1 bis 6 Gew.-Teile, Verarbeitungshilfsmittel sowie gegebenenfalls zusätzlich Füllstoffe, Farbpigmente, Farbstoffe oder anderen Zusatzstoffen bestehen oder diese enthalten.

Erfindungsgemäß werden innerhalb dieses Verfahrens emissionsarme Kunststoffolien, kunststoffhaltige Bahnen oder Kunststoffplatten verformt, wobei der Gesamtgehalt der bei der Verformungstemperatur und Verformungszeit flüchtigen Bestandteile kleiner als 3 Gew.-%, vorzugsweise kleiner als 2 Gew.-%, ist.

Durch diese Ausführungsform wird sichergestellt, daß die poröse, vorzugsweise mikroporöse Negativtiefziehform funktionsfähig bleibt und eine nicht gewünschte Verstopfung der Mikroporen weitgehend vermieden wird.

Der Kunststoff, die Kunststoffmischung oder Kunststofflegierung der emissionsarmen Kunststoffolien, kunststoffhaltigen Bahnen oder Kunststoffplatten besteht bevorzugt aus Vinylchloridhomo- oder -copopolymerisat, vorzugsweise in Kombination mit einem plastifizierenden und/oder elastomermodifizierten Thermoplasten, aus einem Olefinhomo- und/oder -copolymerisat, chlorierten Polyethylen, Ethylen-Propylen-Copolymerisat (EPM), Ethylen-Propylen-Dien-Polymerisat (EPDM), thermoplastischen Polyester, thermoplastischen Polyurethan, kautschukartigen Polyesterurethan und/oder Polyvinylidenfluorid oder enthält einen dieser Kunststoffe als Bestandteil.

Der Kunststoff, die Kunststoffmischung oder die Kunststofflegierung besteht nach einer bevorzugten Ausführungsform aus Vinylchloridhomo- oder -copolymerisat und aus plastifizierenden und/oder elastomermodifizierten Thermoplasten, vorzugsweise Ethylen-Vinylacetat-Copolymerisat (insbesondere mit einem Acetatgehalt von größer als 60 Gew.-%) Ethylen-Vinylacetat-Kohlenmonoxid-Terpolymerisat (Elvaloy), einem thermoplastischen Kautschuk, vorzugsweise Ethylen-Propylen-Copolvmerisat (EPM) und/oder Ethylen-Propylen-Dien-Terpolymerisat (EPDM), einem Kautschuk auf der Basis von Styrolpolymerisat oder Styrolblockpolymerisaten, chloriertem Polyethylen, thermoplastischem Polyurethan, thermoplastischen Polyesterharzen, Olefinelastomer, Acrylat- und/oder Methacrylathomoco- und -pfropfpolymerisate, Nitrilkautschuk, Methylbutadien-Styrol-Polymerisat (MBS) sowie gegebenenfalls andere Modifizierungsmittel, vorzugsweise Styrol-Acrylnitril-Copolymerisate (SAN), Acrylnitril-Butadienharz (NBA), Acrylnitril-Butadien-Copolymerisat (ABS), Acrylnitril-Acrylatharz (NAR), ASA, AEN, ABS und/oder MABS Methylmethacrylat, Butadien-Styrol-Maleinsäure-Terpolymerisat, Mischungen mit Adipatcarbonsäuremischestern und/oder aliphatische oder aromatische Carbonsäureester oder höheren Dicarbonsäureestern, vorzugsweise Trimellithsäureester, Adipaten usw. oder enthält einen oder mehrere dieser Modifizierungsmittel.

Nach einer bevorzugten Ausführungsform wird die Kunststoffolie, die kunststoffhaltige Bahn oder die Kunststoffplatte unter Mitverwendung eines Stempels oder einer ähnlichen Vorrichtung vorgeformt, wobei der Stempel die Form oder Formteilbereiche der Negativtiefziehform (in Positivform) aufweist. Zusammen mit der vorgenannten Temperatureinstellung der Kunststoffolie, -bahn oder -platte und der Negativtiefziehform und der mikroporösen Form und Formoberfläche gelingt es so spannungsarme und/oder weitgehend temperaturbeständige strukturierte Kunststoffolien, -bahnen und -platten zu erhalten.

Nach einer weiteren bevorzugten Ausführungsform wird die gegebenenfalls eingespannte oder vorgespannte Kunststoffbahn unter Mitverwendung eines Druckunterschiedes und unter Erwärmung in die Negativtiefziehform eingebracht und in der Negativtiefziehform verformt, wobei die in die Negativtiefziehform eingebrachte Kunststoffbahn durch die strukturierte, poröse und luftdurchlässige Oberfläche des Negativtiefziehwerkzeuges in der Oberfläche bzw. auf der Oberflächenschicht während der Thermoverformung strukturiert und/oder genarbt und nachfolgend oder gleichzeitig von der (nicht mit der Negativtiefziehform in Kontakt oder Verbindung stehenden) Rückseite der Kunststoffbahn her ein Behandlungsmittel auf die Kunststoffbahn aufgebracht wird.

Nach einer bevorzugten Ausführungsform des erfindungsgemäßen Verfahrens ist das Behandlungsmittel eine Kühlflüssigkeit oder ein kaltes Gas, das die in der Negativtiefziehform befindliche Kunststoffbahn auf die Entformungstemperatur oder in die Nähe der Entformungstemperatur abkühlt oder schockkühlt. Dadurch gelingt es, die erzielten Narben und Strukturen auch im Mikrobereich zu erhalten, bei der Entformung in ihrer Form kaum zu beeinträchtigen, kürzere Arbeitstakte zu erzielen und unter anderem auch verformte Gegenstände oder Formteile mit verbesserten Eigenschaften zu erhalten.

Nach einer weiteren Ausführungsform wird als Behandlungsmittel ein Haftvermittler, vorzugsweise eine Haftvermittlerflüssigkeit oder eine einen Haftvermittler enthaltende Flüssigkeit, ein Klebstoff, eine im Sprühverfahren aufzubringende Kunststoffschicht und/oder eine Sperrschicht, vorzugsweise eine als Flüssigkeit oder als Flüssigkeitsgemisch aufzubringende Sperrschicht, verwendet, Als Sperrschicht werden bevorzugt kunststoffhaltige Flüssigkeiten eingesetzt, vorzugsweise Flüssigkeiten mit mindestens einem Polyacryl-, Polymethacrylsäureester, unvernetztem oder vernetztem Polyurethan, Vinylchloridhomo-, -copolymerisat, -pfropfpolymerisat, vorzugsweise Vinylchloridcopolymerisat mit Polyvinylacetat oder Polyvinylbutyral; Vinylidenhalogenidhomo- oder -copolymerisat, vorzugsweise Vinylidenchlorid oder Polyvinylidenfluorid; Olefincopolymerisat, Polyamid, kautschukartigen Terpolymerisat aus Ethylen, Propylen und einem Dien (EPDM), kautschukartigen Ethylen-Propylen-Mischpolymerisat (EPM), chloriertem Polyethylen, Polyacrylnitril oder aus einem Fluorpolymeren, vorzugsweise Polytetrafluorethylen, mindestens einem Lösungs- und/oder Verdünnungsmittel und/oder Emulgator und/oder Netzmittel und/oder Weichmacher, sowie gegebenenfalls Zusatz- und/oder Verarbeitungshilfsmittel.

Die Sperrschicht verhindert u.a., daß ungünstige Wechselwirkungen zwischen den Bestandteilen des Schaumes oder der Hinterschäumung (z.B. Polyurethanschaum) und der Kunststoffbahn auftreten.

Die Sperrschicht wird in einer Dicke von 1 µm bis 400 µm, vorzugsweise 5 bis 350 µm, aufgetragen. Dabei wird die Sperrschicht in Form einer Verdünnungsmittel enthaltenden Dispersion oder Lösung aufgetragen, die vorzugsweise organisch-chemische kunststofflösende oder -anquellende chemische kunststofflösende oder -anquellende Lösungsmittel und/oder Weichmacher und/oder Wasser als Verdünnungsmittel enthält oder daraus entsteht. Nach einer bevorzugten Ausführungsform werden auch diese Flüssigkeiten (Haftvermittler für Klebschicht und/oder für Sperrschicht) mit zur Abkühlung der in der Negativtiefziehform befindlichen verformten Kunststoffbahn benutzt.

Als Haftvermittler werden die an sich für die jeweils eingesetzten Kunststoffe bekannten Haftvermittler verwendet, vorzugsweise Ethylen-Vinylacetat-Copolymerisat, Ethylen-Vinylacetat-Kohlenmonoxid-Terpolymerisat, Ethylen-Acrylsäureester-Copolymerisat, wobei auch in diesen Fällen Lösungen, Dispersionen oder ähnliche Flüssigkeiten zum Aufbringen der Haftvermittler eingesetzt werden, die gegebenenfalls Lösungs- oder Verdünnungsmittel, Weichmacher und andere Zusatzmittel enthalten.

Das flüssige Behandlungsmittel wird auf die Rückseite der in der Negativtiefziehform befindlichen thermoverformten Kunststoffbahnen unter Sprühen, Fluten und/oder Spritzen oder ähnlichen Aufbringverfahren von Flüssigkeiten aufgebracht. Das nicht von der Kunststoffbahn aufgenommene Behandlungsmittel wird aufgefangen und weiterverwendet, vorzugsweise in den Kreislauf geführt. Dadurch gelingt es, das Behandlungsmittel ohne Verluste oder ohne wesentliche Verluste aufzubringen.

Gemäß der Erfindung wird in diesem Zusammenhang die Kunststoffbahn unter Narbgebung und/oder Oberflächendekoration verformt. Die Narbgebung der Kunststoffbahn erfolgt durch eine poröse, luftdurchlässige, vorzugsweise mikroporöse, luftdurchlässige Formoberfläche und/oder durch eine mikroskopisch feine Strukturen aufweisende Negativtiefziehform, während die Kunststoffbahn oder zumindestens die der Negativtiefziehform zugewandte Oberflächenschicht der Kunststoffbahn sich mindestens im thermoplastischen Temperaturbereich oder darüber (bis 260 °C) befindet, wobei zwischen der Werkzeugtemperatur und der Kunststoffbahn ein Temperaturunterschied von mehr als 30 °C, vorzugsweise mehr als 80 °C, eingehalten wird, so daß die Negativtiefziehform kälter als die zu verformende Bahn ist.

Gleichzeitig oder nachfolgend wird die gegenüber der Temperatur der Kunststoffbahn kalte oder kältere Behandlungsflüssigkeit auf die Rückseite der in der Negativtiefziehform befindlichen thermoverformten Kunststoffbahn aufgebracht, so daß eine merkliche Abkühlung erfolgt, die je nach Art, Menge des Behandlungsmittels, Temperaturhöhe der Kunststoffbahn bei der Verformung und dgl. zur Entformungstemperatur oder in die Nähe der Verformungstemperatur oder so erfolgen kann, daß eine zusätzliche Kühlung oder Abkühlung, z.B. mit einer Kühlflüssigkeit einer Kühlvorrichtung und dgl. nicht mehr oder nur in einem begrenzten Umfang erforderlich wird.

Die Temperatur der Behandlungsflüssigkeit liegt dabei zwischen 5 und 120 °C, vorzugsweise 15 bis 75 °C, und es wird ein Temperaturunterschied zwischen der erhitzten Kunststoffbahn und der Behandlungsflüssigkeit von mehr als 30 °C, vorzugsweise mehr als 60 °C, eingehalten.

Nach einer bevorzugten Ausführungsform wird die Kunststoffbahn auf eine Temperatur innerhalb des thermoplastischen Bereiches oder etwas über der Temperatur des thermoplastischen Bereiches (maximal bis 260 °C) aufgeheizt oder die in diesem Temperaturbereich befindliche Kunststoffbahn verwendet und in einer sonst für das "Slush-Moulding-Verfahren" benutzten Tiefziehform im Negativtiefziehverfahren unter Einhaltung eines Temperaturunterschiedes zwischen dem Werkzeug und der Kunststoffbahn von mehr als 30 °C, vorzugsweise mehr als 80 °C, tiefgezogen und mit dem Behandlungsmittel behandelt, während der verformte Gegenstand noch in der Form ist.

Nach einer weiteren bevorzugten Ausführungsform wird die Kunststoffbahn im Negativtiefziehverfahren unter Narbgebung und/oder Oberflächendekoration verformt. Die Narbgebung und/oder Oberflächendekoration der Kunststoffbahn erfolgt dabei durch eine poröse, luftdurchlässige, vorzugsweise mikroporöse, luftdurchlässige Formoberfläche aufweisende Negativtiefziehform, die eine metall-, metallegierung-, mikrometallpartikelhaltige, keramik-metall- und/oder keramik-mikrometallpartikelhaltige und/oder feinstteilige Füllstoffe enthaltende Schicht oder Oberfläche mit mikroskopisch feiner Struktur und mit einer durchschnittlichen Metallschichtdicke, Füllstoffpartikeldicke oder Metallpartikeldicke unter 80 µm, vorzugsweise unter 60 µm, aufweist, wobei zwischen der Werkzeugtemperatur und der Kunststoffolie, kunststoffhaltigen Bahn oder Kunststoffplatte, ein Temperaturunterschied von mehr als 30 °C, vorzugsweise mehr als 80 °C, eingehalten wird, um gleichzeitig oder nachfolgend ein Behandlungsmittel auf die Rückseite der thermoverformten Kunststoffbahn aufgebracht wird, die sich vorzugsweise noch in der Negativtiefziehform befindet.

Gemäß der Erfindung wird bereits bei dem Vorstrecken oder Vorformen durch den Stempel eine Form hergestellt, die ganz oder in Teilbereichen den herzustellenden Formteil oder Gegenstand entspricht, wobei bereits bei, während oder am Schluß des Vorstreckens oder Vorformens Temperatur- und/oder Druckunterschiede zwischen der Kunststoffolie, der kunststoffhaltigen Bahn oder der Kunststoffplatte und dem Werkzeug und/oder dem Stempel oder der Negativtiefziehform eingestellt werden.

Nach einer besonders wirtschaftlichen Ausführungsform wird die Kunststoffolie oder Kunststoffolienbahn oder -platte vom Extruder oder einer ähnlichen Plastifiziervorrichtung kommend unter Ausnutzung der bereits vorhandenen Wärmekapazität und gegebenenfalls durch zusätzliche Erwärmung auf die Temperatur im thermoplastischen Bereich gebracht oder gehalten oder die Kunststoffolie, -bahn oder Kunststoffplatte wird auf eine Temperatur im thermoplastischen Bereich vor Einbringung in die Negativtiefziehformvorrichtung vorerwärmt.

Der Stempel enthält eine Temperiervorrichtung, vorzugsweise Kühlvorrichtung zur Temperaturführung oder Temperatursteuerung, damit innerhalb des Verfahrens die zwischen der Kunststoffolie, -bahn oder -platte gewünschte Temperaturdifferenz auch bei dem Stempel eingestellt werden kann.

Nach einer bevorzugten Ausführungsform des Verfahrens weist der Stempel auch ganz oder teilweise Seitenwände oder Seitenwandbereich des herzustellenden Formteiles oder Gegenstandes auf und unterstützt und trägt die Folie, Bahn oder Platte auch in diesen Bereichen vor Einbringen in die Negativtiefziehform, wobei er sie gleichzeitig vorformt.

Nach einer weiteren bevorzugten Ausführungsform wird die Entformung durch oder unter Mitverwendung eines Blas- oder Gasdruckes durchgeführt, wodurch eine Erleichterung der Entformung, insbesondere in kritischen Bereichen (Hinterschneidungen) ermöglicht wird.

Mit Hilfe des erfindungsgemäßen Verfahrens lassen sich die unterschiedlichsten thermoverformbaren Kunststoffolien, -bahnen oder -platten verarbeiten.

Nach einer Ausführungsform wird als Kunststoffolie ein Kunststofffolienlaminat eingesetzt, bei dem eine Schicht mit einem Treibmittel oder Treibmittelgemisch versehen ist, das bei dem Aufheizvorgang, bei dem Umformvorgang und/oder Narbgebungsvorgang aufschäumt oder aufzuschäumen beginnt, wobei die gebildete geschäumte Schicht als Dekor- und/oder Narbgebungsschicht oder als Polsterschicht auf der Rückseite der strukturierten und/oder genarbten Folien dient.

Die Erfindung betrifft weiterhin die Verwendung von dünnen Folien zur Herstellung von spannungsarmen Formteilen mit genauer Widergabe oder Reproduktion von form- und temperaturstabilen Oberflächenstrukturierungen von Modellen durch die Warmverformung dieser Folien in porösen Negativtiefziehwerkzeugen.

Mit Hilfe des erfindungsgemäßen Verfahrens können aus thermoverformten Kunststoffolien, Kunststoffbahnen oder Kunststoffplatten spannungsarme Oberflächenbeschichtungen hergestellt werden. Es gelingt eine Verbesserung der Grifffreundlichkeit der Oberfläche zu erzielen. Weiterhin wird eine Verbesserung der optischen Eigenschaften durch Bedrucken der Oberflächenmaterialien erzielt, die nachfolgend innerhalb des Verfahrens mit Strukturierungen zusätzlich versehen werden können.

Die Erfindung betrifft weiterhin die Verwendung von dünnen Folien mit einer Dicke von 100 bis 1400 µm, vorzugsweise 200 bis 800 µm, zur Herstellung von Formteilen oder Gegenständen nach dem Negativtiefziehverfahren mit einer Schaumschicht oder Hinterschäumung zur Herstellung von Formteilen oder Gegenständen, deren Oberfläche vorzugsweise eine gute Narbstabilität auch bei Wärmelagerung aufweisen.

Schließlich betrifft die Erfindung auch die Verwendung von Folien mit einer Shore-D-Härte von 20 bis 60, vorzugsweise 25 bis 40, zur Herstellung von Formteilen oder Gegenständen nach dem Negativtiefziehverfahren mit einer Schaumschicht oder Hinterschäumung, deren Folienoberfläche vorzugsweise eine gute Narbstabilität bei Wärmelagerung aufweisen.

Im Rahmen des erfindungsgemäßen Verfahrens gelingt es, neben einer größeren Gestaltungsfreiheit der Form und der Oberfläche auch sehr gute Reproduzierbarkeit von Lederoptiken und spannungsarme Gegenstände und Formteile zu erzielen. Neben der verbesserten Oberflächenoptik sind somit auch eine verbesserte Alterung bei den spannungsarm verformten, negativtiefgezogenen Folien gemäß der Erfindung feststellbar.

In Kombination mit Verwendung emissionsarmer Folien oder Bahnen beziehungsweise emissionsarmer Kunststoffmischungen oder -legierungen zur Herstellung dieser Folien und Bahnen wird im Rahmen des erfindungsgemäßen Verfahrens bei den verwendeten niedrigen Werkzeug- und Stempeltemperaturen eine Verschließung der Feinst- oder Mikroporen des Negativtiefziehwerkzeuges weitgehend vermieden, wodurch bei der Verwendung dieser Werkzeuge im Rahmen des erfindungsgemäßen Verfahrens eine wesentlich höhere Stückzahl bei der Herstellung der Formteile oder Gegenstände bei insbesondere wesentlich höheren Stanzzeiten bei der Großserienherstellung oder Großserienfertigung möglich wird.

Gemäß einer bevorzugten Ausführungsform werden tiefziehfähige, ungeschäumte Mono- oder Verbundfolien mit einer Dicke von 100 µm bis 1.400 µm, vorzugsweise 200 µm bis 1.000 µm, eingesetzt. Sie bestehen aus einer oder mehreren weichmacherfreien oder weichmacherarmen Schicht bzw. Schichten aus einer Mischung bzw. Legierung von Polyvinylchlorid (PVC) oder Vinylchlorid-Copolymerisat, Acrylinitril-Butadien-Copolymerisat (ABS) und/oder einem Plastifiziermittel oder Modifizierungsmittel, vorzugsweise auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder Mischungen oder Legierungen von Polyvinylchlorid (PVC) oder Vinylchlorid-Copolymerisat und Acrylnitril-Butadien-Copolymerisat (ABS) mit einem PVC-ABS-Gehalt von mehr als 40 Gew.-%, vorzugsweise mehr als 50 Gew.-%, (bezogen auf 100 Gew.-Teile der Kunstharzmischung) mit einem anderen Kunstharz, vorzugsweise einem Acrylnitril-Copolymerisat oder einem Kunstharzgemisch auf der Basis von Acrylnitril-Copolymerisat, sowie einem Plastifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist.

Nach einer Ausführungsform wird die vorgenannte Folie als Unterfolie verwendet und zusätzlich eine weichmacherarme Oberfolie mit einer bestimmten Zusammensetzung. Die Oberfolie besitzt nach einer bevorzugten Ausführungsform eine Dicke von 100 bis 500 µm, vorzugsweise 120 bis 200 µm, und besteht aus Polyvinylchlorid sowie einem Plastifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder aus Mischungen von Polyvinylchlorid oder Vinylchlorid-Copolymerisat mit einem anderen Kunstharz, vorzugsweise einem Acrylnitril-Copolymerisat oder einem Kunstharzgemisch auf Basis von Acrylnitril-Copolymerisat und/oder einem Plastifiziermittel oder Modifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist. Die Oberfolie kann auch als Unterfolie oder als Monofolie Verwendung finden.

Als Polyvinylchlorid für die Kunststoffbahn (Monofolie, Laminate oder coextrudierte Folien aus Unter- und Oberfolie) werden Vinylchloridhomopolymerisate eingesetzt. Es können jedoch auch Vinylchlorid-Copolymerisate, die durch Polymerisation mit bis zu 20 Gew.-%, vorzugsweise bis zu 10 Gew.-%, (bezogen auf 100 Gew.-% Vinylchlorid-Copolymerisat) anderer olefinisch ungesättigter Monomere hergestellt werden, Verwendung finden.

Als Vinylchloridpolymerisate werden bevorzugt Suspensions- und Blockpolymerisate eingesetzt. Es können jedoch auch Emulsionspolymerisate Verwendung finden. Als Polyolefine für die Folie können Polyethylen, Polypropylen sowie Copolymere von Ethylen und Propylen oder Legierungen von einem oder mehreren dieser Bestandteile eingesetzt werden.

Nach einer bevorzugten Ausführungsform besteht das Acrylnitril-Copolymerisat, das für die Kunststoffbahn eingesetzt wird, aus Styrol-Acrylnitril-Copolymerisat (SAN) und/oder Acrylnitril-Butadienharz (NBR).

Das Plastifiziermittel für die Kunststoffbahn bzw. Kunststoffmischung für die Kunststoffbahn besteht aus einem plastifizierenden Hochpolymeren mit polaren Gruppen, das mit dem Polyvinylchlorid einen Glaspunkt bildet, der zwischen dem Glaspunkt des PVC und dem Glaspunkt des Plastifiziermittels liegt.

Nach einer Ausführungsform besteht das Acrylnitril-Copolymerisat der Oberfolie aus Acrylnitril-Butadien-Copolymerisat (ABS) und/oder Styrol-Acrylnitril-Copolymerisat (SAN) und/oder Acrylnitril-Butadienharz (NBR).

Nach einer bevorzugten Ausführungsform beträgt der PVC-Gehalt der Oberfolie (bezogen auf die Kunstharzmischung bzw. -legierung, ohne Füllstoffe und Verarbeitungshilfsmittel) mehr als 50 Gew.-%, vorzugsweise mehr als 60 Gew.-%.

Der Gehalt des polaren Gruppen aufweisenden Plastifiziermittels oder Plastifiziermittelgemisches in der Kunststoffbahn (Oberfolie und/oder Unterfolie) beträgt 5 - 30 Gew.-%, vorzugsweise 7 - 23 Gew.-%, (bezogen auf die Kunstharzmischung der Kunststoffbahn bzw. -folie - gerechnet ohne Verarbeitungshilfsmittel, Zusatzstoffe, Füllmittel un dgl.).

Nach einer zweckmäßigen Ausführungsform besteht das Plastifiziermittel aus einem Ethylen-Vinylacetat-Copolymerisat (EVA) mit polaren Gruppen und einem Vinylacetatgehalt von 60 - 80 Gew.-%, vorzugsweise 65 - 70 Gew.-%.

Nach einer anderen bevorzugten Ausführungsform besteht das Plastifiziermittel aus einem olefinischen Terpolymerisat mit statistisch verteilten Acetat- und Kohlenmonoxidgruppen. Es weist ein Molekulargewicht größer als 200.000 und eine Zusammensetzung von 50 - 79 Gew.-%, vorzugsweise 57 - 72 Gew.-% Ethylen, 35 - 15 Gew.-%, vorzugsweise 29 - 19 Gew.-% Vinylacetat und 15 - 6 Gew.-%, vorzugsweise 14 - 9 Gew.-% Kohlenmonoxid auf.

Nach einer anderen zweckmäßigen Ausführungsform wird als Plastifiziermittel ein Polycaprolacton (PCL) mit polaren Gruppen verwendet.

Weiterhin werden bevorzugt in der Kunststoffmischung aliphatische und/oder aromatische Polycarbonsäuren eingesetzt.

Die Kunststoffbahnen (Ober- und/oder Unterfolie oder Monofolie) enthalten cadmiumfreie Stabilisatoren, vorzugsweise Zinnstabilisatoren. Die Mischungen werden vorzugsweise unter Zusatz von Stabilisatoren, Antioxidantien, Verarbeitungshilfsmitteln usw. hergestellt.

Nach einer bevorzugten Ausführungsform besteht bzw. bestehen die Unterfolie bzw. Unterfolien aus 20 - 50 Gew.-%, vorzugsweise 25 - 37 Gew.-%, Polyvinylchlorid und 60 - 20 Gew.-%, vorzugsweise 37 - 25 Gew.-%, Acrylnitril-Butadien-Copolymerisat (ABS), (bezogen auf die Kunstharzmischung bzw. -legierung ohne Verarbeitungshilfsmittel und Füllstoffe) sowie Restbestandteilen aus einem Plastifiziermittel oder Plastifiziermittelgemisch und Styrol-Acrylnitril-Copolymerisat (SAN) und/oder Acrylnitril-Butadienharz (NBA) und enthalten je 100 Gew.-Teile des Kunstharzgemisches zusätzlich 0,5 - 12 Gew.-Teile, vorzugsweise 1 - 7 Gew.-Teile, eines oder mehrerer Verarbeitungshilfsmittel sowie 0 - 40 Gew.-Teile, vorzugsweise 0,5 - 20 Gew.-Teile, eines Füllstoffes oder Füllstoffgemisches und/oder eines Mittels zum Schwerentflammbarmachen. Diese Rezeptur ist auch für Monofolien geeignet.

Die Oberfolien enthalten bevorzugt 10 - 35 Gew.-%, vorzugsweise 18 - 30 Gew.-%, eines Plastifiziermittels oder Plastifiziermittelgemisches oder Modifiziermittels (bezogen auf die Kunstharzmischung bzw. -legierung ohne Verarbeitungshilfsmittel und Füllstoffe), sowie je 100 Gew.-Teile des Kunstharzgemisches 0,5 - 12 Gew.-Teile, vorzugsweise 1 - 7 Gew.-Teile, eines oder mehrerer Verarbeitungshilfsmittel. Ggf. können nach einer Ausführungsform je 100 Gew.-Teile der Kunststoffmischung 0 - 40 Gew.-Teile, vorzugsweise 0,5 - 20 Gew.-Teile, eines Füllstoffes oder Füllstoffgemisches und/oder eines Mittels zum Schwerentflammbarmachen zugefügt werden. Diese Mischung ist auch für Kunststoffbahnen oder Monofolien geeignet.

Die Kunststoffbahn oder die aus Unterfolie und Oberfolie bestehende Kunststoffolie ist nach einer Ausführungsform mit einer Lackschicht oder Kunststoffbeschichtung, vorzugsweise auf der Basis von Acrylatharzen, Polyvinylchlorid-Acrylatharzen, Polyurethanharzen und/oder Epoxidharzen, überzogen.

Nach dem erfindungsgemäßen Verfahren und der erfindungsgemäßen Vorrichtung werden bevorzugt Formkörper oder Formkörperteile für Kraftfahrzeuginnenräume, Armaturenbretter von Kraftfahrzeugen sowie Sicherheitsabdeckungen, Seitenwände, Vorder- und Rückwandteile, Schalttafeln sowie Seitenpfosten und deren Sicherheitsabdeckungen für Kraftfahrzeuge und Flugzeuge hergestellt.

Zum Ausschäumen werden die an sich bekannten schäumbaren Kunststoffe, z.B. Polyurethanschaum, Polyolefinschaum und dgl. verwendet, denen je nach Art und Zusammensetzung der Kunststoffe bei der Herstellung Treibmittel, Mittel zum Schwerentflammbarmachen, Hilfs- und Zusatzstoffe vor dem Verschäumen zugesetzt werden.

Die Dicke des Schaumes richtet sich nach dem vorgesehenen Einsatzzweck und der äußeren Form des Formteiles.

Im Rahmen einer bevorzugten Ausführungsform wird eine (aus einer oder mehreren Schichten bestehende) Kunststoffbahn oder Kunststoffolie, insbesondere flexible thermoverformbare Kunststoffbahn oder flexible Tiefziehfolie, bestehend aus 90 - 25 Gew.-%, vorzugsweise 85 - 28 Gew.-%, eines Vinylchloridhomo-, -co-, -pfropfpolymerisates und/oder einer Legierung oder Mischung auf der Basis von Polyvinylchlorid und 10 - 75 Gew.-%, vorzugsweise 15 - 72 Gew.-% (bezogen auf 100 Gew.-% der Kunststoffmischung oder -legierung ohne Zusatzmittel, Füllstoffe, Stabilisatoren, Verarbeitungshilfsmittel), mindestens eines Modifizierungsmittels mit einer Glasumwandlungstemperatur von größer als 70 °C, vorzugsweise größer als 80 °C, und/oder mindestens eines Modifizierungsmittels und einer Glasumwandlungstemperatur von kleiner als 60 °C, vorzugsweise kleiner als 50 °C, sowie zusätzlich mindestens einem Stabilisierungsmittel oder Stabilisierungsmittelgemisch und gegebenenfalls Füllstoffen, Antioxidantien, Weichmacher, Gleitmittel, Verarbeitungshilfsmittel, Farbstoffe oder Farbpigmente, Flammschutzmittel oder andere Zusatzmittel oder Gemische von einem oder mehreren dieser Stoffe, zur Thermoverformung gemäß der Erfindung im Negativtiefziehverfahren eingesetzt.

Das Gewichtsverhältnis des Modifizierungsmittels oder Modifizierungsmittelgemisches mit einer Glasumwandlungstemperatur von größer als 70 °C, vorzugsweise größer als 80 °C, zu dem weiteren Modifizierungsmittel oder Modifizierungsmittelgemisch mit einer Glasumwandlungstemperatur von kleiner als 60 °C, vorzugsweise kleiner als 50 °C, beträgt 4 : 1 bis 1 : 4, vorzugsweise 3 : 1 bis 1 : 3.

Das Polymere oder das Polymergemisch (Modifizierungsmittel), das eine Glasumwandlungstemperatur von größer als 70 °C, vorzugsweise größer als 80 °C, besitzt, ist bevorzugt ein Styrol-Acrylnitril-Copolymerisat (SAN), ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate, während das andere Polymere oder Polymergemisch (Modifizierungsmittel) ein Homo-, Pfropf-, Copolymerisat oder eine Kunststofflegierung oder -mischung mit polaren Gruppen mit einer Glasumwandlungstemperatur von kleiner als 60 °C, vorzugsweise kleiner als 50 °C, vorzugsweise Ethylen-Vinylacetat-Copolymerisat und/oder Ethylen-Vinylacetat-Kohlenmonoxid-Terpolymerisat, ist.

Nach einer weiteren bevorzugten Ausführungsform sind der Negativtiefziehform Düsen zugeordnet, deren Sprühvorrichtung oder Düsenöffnung im wesentlichen zur Negativtiefziehform gerichtet sind. Darüberhinaus ist eine Auffangwanne zum Auffangen der Behandlungsflüssigkeit vorgesehen.

## Patentansprüche

1. Verfahren zur Herstellung von Formteilen oder Gegenständen nach dem Negativtiefziehverfahren für Kraftfahrzeuge oder Kraftfahrzeuginnenverkleidungen aus thermoverformbaren Kunststoffolien, -platten oder -bahnen, die vor der Einbringung in die Negativtiefziehform auf eine Temperatur in der Nähe oder oberhalb des Schmelzbereiches, Schmelzpunktes oder auf eine Temperatur innerhalb des thermoplastischen Bereiches bis 260 °C oder darüber aufgeheizt werden und unter Mitverwendung eines Druckunterschiedes und unter Erwärmung in die Negativtiefziehform eingebracht und in der Negativtiefziehform unter Narbgebung und/oder Oberflächendekoration verformt wird und die Narbgebung und/oder Oberflächendekoration der Kunststoffolie, -platte oder -bahn durch eine poröse, luftdurchlässige, vorzugsweise mikroporöse luftdurchlässige Formoberfläche aufweisende Negativtiefziehform erfolgt, die eine metall-, metalllegierungs-, mikrometallpartikelhaltige keramilietall- und/oder keramikmikrometallpartikelhaltige Schicht oder Oberfläche mit einer durchschnittlichen Metallschichtdicke, Metallpartikeldicke oder Partikeldicke
unter 80 µm
aufweist, wobei zwischen der kälteren Werkzeugtemperatur und der Kunststoffolie, -platte oder -bahn, ein Temperaturunterschied von
mehr als 30 °C
eingehalten wird, dadurch gekennzeichnet, daß in die Negativtiefziehform ein Formkörper, ein Gegenstand oder ein Folienbahnzuschnitt aus dem gleichen oder einem anderen Material mit seiner Sicht- oder Dekorseite auf einen vorbestimmten Bereich der Formoberfläche der Negativtiefziehform eingelegt, eingebracht und/oder dieser so befestigt oder angeordnet wird, daß der Formkörper, Gegenstand oder der Folienbahnzuschnitt an der inneren Formfläche oder in einer Vertiefung oder Erhebung der Negativtiefziehform unmittelbar anliegt, die äußeren aufliegenden Seitenkanten des Gegenstandes von der Negativtiefziehform keinen oder einen durchschnittlichen Abstand von weniger als 500 µm aufweisen und nachfolgend auf seiner Rückseite unter Freilassung der gewünschten Sichtfläche (unter einwandfreiem Konturenverlauf) die erhitzte Kunststoffolie, -platte oder -bahn oder aus einem Breitschlitzextruder austretende Kunststoffbahn unter Ausnutzung der Wärmekapazität derselben, die einen Gesamtgehalt der bei der Verformungstemperatur und Verformungszeit flüchtigen Bestandteile kleiner al 3 Gew.-% aufweisen, den Formkörper, Gegenstand oder der Folienbahnzuschnitt auf seiner nicht auf der Negativtiefziehform aufliegenden Fläche umschließt oder teilweise bedeckt und nachfolgend der Tiefziehling um mehr als 50 ° gekühlt oder schockgekühlt, hinterschäumt und mit einem Träger hinterlegt wird, wobei auch der eingebrachte Formkörper, Gegenstand oder Folienbahnzuschnitt an seinen beschichteten Flächen hinterschäumt und mit einem Träger hinterlegt wird.

2. Verfahren nach Anspruch 1, dadurch gekennzeichnet, daß die Kunststoffolie, kunstoffhaltige Bahn oder Kunstoffplatte vor der Einbringung in die Negativtiefziehform auf eine Temperatur in der Nähe oder oberhalb des Schmelzbereiches, Schmelzpunktes oder auf eine Temperatur innerhalb des thermoplastischen Bereiches bis 260°C oder darüber aufgeheizt wird und die Werkzeugtemperatur (Negativtiefziehform) um mehr als 30°C, vorzugsweise um mehr als 80°C unter dem Schmelzpunkt, dem Schmelzbereich oder der Schmelztemperatur oder Erweichungstemperatur der Kunststoffolie, kunststoffhaltigen Bahn oder Kunststoffplatte eingestellt wird, daß danach die auf die Verformungstemperatur erhitzte Kunststoffolie, kunststoffhaltige Bahn oder Kunststoffplatte oder aus einem Breitschlitzextruder austretende Kunststoffbahn in der Negativtiefziehform eingespannt und gehalten und in der Negativtiefziehform verformt wird, wobei unter Ausnutzung der Wärmekapazität der Krnnststoffolie, kunststoffhaltigen Bahn oder Kunststoffplatte oder der extrudierten Bahn der Formkörper, Gegenstand oder der Folienbahnzuschnitt auf seiner nicht auf der Negativtiefziehform aufliegenden Fläche von der tiefgezogenen Kunststoffolie, Kunststoffbahn oder -platte umschlossen oder teilweise überschichtet oder bedeckt und nachfolgend der Tiefziehling um mehr als 50°, vorzugsweise mehr als 100°, gekühlt oder schockgekühlt, hinterschäumt und mit einem Träger hinterlegt wird, wobei vorzugsweise auch der eingebrachte Formkörper, Gegenstand oder Folienbahnzuschnitt an seinen beschichteten Flächen hinterschäumt und mit einem Träger hinterlegt wird.

3. Verfahren nach Anspruch 1 und 2, dadurch gekennzeichnet, daß der Formkörper, Gegenstand oder der Folienbahnzuschnitt auf den zu beschichtenden Flächen mit einer Klebschicht, vorzugsweise hitzeaktivierbaren Klebeschicht, oder einem Haftvermittler versehen ist.

4. Verfahren nach einem oder mehreren der Ansprüche 1 bis 3, dadurch gekennzeichnet, daß die Formkörper, Gegenstände oder die Folienbahnzuschnitte durch eine Übergabevorrichtung auf ein vorbestimmtes Flächenteil der Negativtiefziehform aufgebracht, dort befestigt und von der nachträglich eingebrachten sowie dort verformten Kunststoffolie, kunststoffhaltigen Bahn oder dem extrudierten Bahn umschlossen oder teilweise beschichtet werden.

## Claims

1. Method for producing moulded parts or articles according to the negative deep-drawing process for motor vehicles or interior motor vehicle panelling from plastic films, sheets or webs which can be formed under heat, are heated before being inserted in the negative deep-drawing die to a temperature around or above the melting range, melting point or to a temperature within the thermoplastic range up to 260°C or above, inserted in the negative deep-drawing die while being heated and with the simultaneous use of a pressure difference and formed in the negative deep-drawing die while undergoing graining and/or surface decoration, and the graining and/or surface decoration of the plastic film, sheet or web is carried out by a negative deep-drawing die having a porous, air-permeable, preferably microporous, airpermeable die surface, which die comprises a layer or surface which contains metal, a metal alloy, micrometal particles, a cermet and/or ceramic-micrometal particles and has an average metal layer thickness, metal particle thickness or particle thickness of
less than 80 µm,
with a temperature difference of
more than 30°C
being maintained between the colder die temperature and the plastic film, sheet or web, characterised in that a moulding, an article or a film web blank of the same or a different material is placed or inserted in the negative deep-drawing die with its visible or decorative side applied to a predetermined area of the die surface of the deep-drawing die and/or this is secured or arranged such that the moulding, article or film web blank lies directly against the inner die surface or in a cavity or elevation of the negative deep-drawing die, the outer supported side edges of the article are disposed at no or an average distance of less than 500 µm from the negative deep-drawing die and, using the heat capacity of the plastic film, sheet or web and leaving the required visible surface free (with a faultless contour), the heated plastic film, sheet or web or plastic sheet emerging from a slot die extruder, which have a total content of matter which is volatile at the forming temperature and in the forming time of less than 3% by weight, surrounds or partly covers the moulding, article or foil web blank on its reverse side on its surface which is not supported on the negative deep-drawing die, and the deep-drawn part is subsequently cooled or shock-cooled by more than 50°, foam-backed and backed with a supporting base, the inserted moulding, article or foil web blank also being foam-backed and backed with a supporting base on its coated surfaces.

2. Method according to claim 1, characterised in that the plastic film, plastic-containing web or plastic sheet is heated before being inserted in the negative deep-drawing die to a temperature around or above the melting range, melting point or to a temperature within the thermoplastic range up to 260°C or above, and the die temperature (negative deep-drawing die) is set to more than 30°C, preferably to more than 80°C below the melting point, the melting range or the melting temperature or softening temperature of the plastic film, plastic-containing web or plastic sheet, that the plastic film, plastic-containing web or plastic sheet which is heated to the forming temperature or plastic web emerging from the slot die extruder is clamped and held in the negative deep-drawing die and formed in the latter, and, using the heat capacity of the plastic film, plastic-containing web or plastic sheet or of the extruded web, the moulding, article or the film web blank is surrounded or partly coated or covered on its surface which is not supported on the negative deep-drawing die by the deep-drawn plastic film, plastic web or sheet, and the deep-drawn part is subsequently cooled or shock-cooled by more than 50°, preferably more than 100°, foam-backed and backed with a supporting base, with the inserted moulding, article or film web blank also being foam-backed and backed with a supporting base on its coated surfaces.

3. Method according to claims 1 and 2, characterised in that the moulding, article or the film web blank is provided on the surfaces which are to be coated with an adhesive layer, preferably an adhesive layer which can be activated by heat, or an adhesion promoter.

4. Method according to one or more of claims 1 to 3, characterised in that the mouldings, articles or the film web blanks are applied by a delivery device to a predetermined surface part of the negative deep-drawing die, secured at this point and surrounded by or partly coated with the subsequently inserted plastic film or plastic-containing web, which is formed here, or the extruded web.

## Revendications

1. Procédé de fabrication selon le procédé d'emboutissage profond négatif de pièces moulées ou d'objets pour véhicules automobiles, ou de garnissages internes de véhicules automobiles, constitués de feuilles, de plaques ou de bandes thermoformables qui, avant d'être introduites dans le moule d'emboutissage profond négatif, sont chauffées à une température voisine ou supérieure au domaine de fusion, au point de fusion ou à une température qui se situe dans le domaine thermoplastique jusqu'à 260°C ou plus, sont introduites avec application conjointe d'une différence de pression et d'un chauffage dans le moule d'emboutissage profond négatif et y sont moulées en leur conférant un grainage et/ou une décoration superficielle et le grainage et/ou la décoration superficielle de la feuille, de la plaque ou de la bande de matière plastique se font dans un moule d'emboutissage profond négatif présentant une surface de moulage poreuse, perméable à l'air, de préférence microporeuse et perméable à l'air, ce moule comportant une couche ou une surface de métal, d'alliage métallique, de métal céramique contenant des microparticules métalliques et/ou contenant des microparticules métalliques et de la céramique avec une épaisseur moyenne de la couche de métal, des particules métalliques ou des particules inférieure à 80 micromètres, une différence de température de plus de 30°C étant maintenue entre la température de l'outil froid et celle de la feuille, de la plaque ou de la bande de matière plastique, caractérisé en ce qu'on introduit, met en place et/ou fixe ou dispose dans le moule d'emboutissage profond négatif un corps moulé, un objet ou une section de bande de feuille qui est constitué du même matériau ou d'un autre matériau, avec son côté visible ou décoré sur une région prédéterminée de la surface de moulage du moule d'emboutissage profond négatif, de telle sorte que le corps moulé, l'objet ou la section de feuille soit appliqué directement sur la surface interne de moulage, dans un évidement ou sur une protubérance du moule d'emboutissage profond négatif, les bords latéraux de l'objet situés vers l'extérieur ne présentant, vis-à-vis du moule d'emboutissage profond négatif, aucun écart ou seulement un écart moyen inférieur à 500 micromètres, de préférence inférieur à 200 micromètres et, ensuite, sur son verso, après libération de la surface visible souhaitée (en épousant les contours de manière irréprochable), la feuille, la plaque ou la bande de matière plastique chauffée ou une bande de matière plastique sortant d'une extrudeuse à filière plate, en tirant profit de la capacité thermique de celle-ci, qui contient une teneur totale en composants volatils, à la température de déformation et pendant le temps de déformation, inférieure à 3 % en poids, entoure ou recouvre partiellement le corps moulé, l'objet ou la section de feuille sur sa surface qui n'est pas en contact avec le moule d'emboutissage profond négatif et ensuite, la pièce ayant subi l'emboutissage est refroidie ou refroidie par choc thermique de plus de 50°C, expansée au verso et appliquée sur un support et le corps moulé, l'objet ou la section de bande de feuille introduit étant également expansé au verso sur sa face revêtue et doublée d'un support.

2. Procédé selon la revendication 1, caractérisé en ce que la feuille de matière plastique, la bande de matière plastique ou la plaque de matière plastique est chauffée, avant son introduction dans le moule d'emboutissage profond négatif, à une température voisine ou supérieure au domaine de fusion, au point de fusion ou à une température qui se situe dans le domaine thermoplastique jusqu'à 260°C ou au-dessus et la température de l'outil (la température du moule d'emboutissage profond négatif) est réglée à plus de 30°C, de préférence à plus de 80°C en dessous du point de fusion, du domaine de fusion ou de la température de fusion ou encore de la température de ramollissement de la feuille de matière plastique, de la bande de matière plastique ou de la plaque de matière plastique et en ce qu'ensuite, la feuille de matière plastique, la bande de matière plastique ou la plaque de matière plastique chauffée à la température de déformation ou la bande de matière plastique sortant d'une extrudeuse à filière plate est tendue et maintenue dans le moule d'emboutissage profond négatif et est moulée dans celui-ci, en sorte qu'en tirant profit de la capacité thermique de la feuille de matière plastique, de la bande de matière plastique ou de la plaque de matière plastique ou encore de la bande extrudée, le corps moulé, l'objet ou la section de feuille soit entouré ou partiellement revêtu, sur sa surface qui ne vient pas en contact avec le moule d'emboutissage profond négatif, par la feuille de matière plastique, la bande de matière plastique ou la plaque de matière plastique emboutie, et, ensuite, la pièce emboutie est refroidie ou refroidie par choc thermique de plus de 50°C, de préférence de plus de 100°C, expansée au verso et appliquée sur un support, et le corps moulé, l'objet ou la section de feuille introduit étant également expansé au verso sur sa surface revêtue et doublée d'un support.

3. Procédé selon les revendications 1 et 2, caractérisé en ce que le corps moulé, l'objet ou la section de matière plastique est pourvu sur la face à revêtir d'une couche de colle, de préférence d'une couche de colle activable à chaud, ou d'un agent adhésivant.

4. Procédé selon l'une ou plusieurs des revendications 1 à 3, caractérisé en ce que les corps moulés, les objets ou les sections de feuille sont appliqués par un dispositif de transfert sur une partie de surface prédéterminée du moule d'emboutissage profond négatif, y sont fixés et entourés ou partiellement revêtus de la feuille de matière plastique, de la bande de matière plastique ou de la bande extrudée qui est mise en place et y est moulée ultérieurement.
